# EUROPEAN PATENT APPLICATION

(11) **EP 2 837 442 A1**
(43) Date of publication of application: **18.02.2015**
(21) Application number: 13775761.3
(22) Date of filing: 11.04.2013
(51) Int. Cl.: B22F 3/02, B30B 11/02, H01F 1/153, H01F 1/22, H01F 41/02

(54) **HIGH-DENSITY MOLDING DEVICE AND HIGH-DENSITY MOLDING METHOD FOR MIXED POWDER**

(30) Priority: 12.04.2012 JP 2012090919
(71) Applicant: Aida Engineering, Ltd., Sagamihara-shi, Kanagawa 252-5181 (JP)
(72) Inventor: HASEGAWA, Kazuhiro, Sagamihara-shi Kanagawa 252-5181 (JP); HIRAI, Yoshiki, Sagamihara-shi Kanagawa 252-5181 (JP)
(74) Representative: MERH-IP Matias Erny Reichl Hoffmann
(86) International application number: PCT/JP2013/060890
(87) International publication number: WO 2013/154146

(57) **Abstract**

A first die is filled with a mixed powder that is a mixture of a basic metal powder and a low-melting-point lubricant powder, the internal dimension of the first die being smaller than the internal dimension (=100%) of a second die by 1 to 5%. A first pressure is applied to the mixed powder in the first die to form a mixed powder intermediate compressed body. The mixed powder intermediate compressed body is heated to the melting point of the lubricant powder. A second pressure is applied to the heated mixed powder intermediate compressed body in the second die that has been pre-heated to the melting point of the lubricant powder to form a high-density mixed powder final compressed body.

## Description

### TECHNICAL FIELD

The present invention relates to a high-density molding method and a high-density molding system that can form a green compact having high density (e.g., 7.75 g/cm³) by pressing a mixed powder twice.

### BACKGROUND ART

Powder metallurgy is a technique that normally presses (compresses) a metal powder to form a green compact having a given shape, and heats the green compact to a temperature around the melting point of the metal powder to promote intergranular coupling (solidification) (i.e., sintering process). This makes it possible to inexpensively produce a mechanical part that has a complex shape and high dimensional accuracy.

An improvement in mechanical strength of a green compact has been desired in order to deal with a demand for a further reduction in size and weight of mechanical parts. When a green compact is subjected to a high temperature, the magnetic properties of the green compact may deteriorate. Therefore, the subsequent high-temperature treatment (sintering process) may be omitted when producing a magnetic-core green compact, for example. In other words, a method that improves mechanical strength without performing a high-temperature treatment (sintering process) has been desired.

The mechanical strength of a green compact increases significantly (hyperbolically) as the density of the green compact increases. For example, a method that mixes a lubricant into a metal powder, and press-molds the metal powder while achieving a reduction in friction resistance has been proposed as a typical high-density molding method (e.g., JP-A-1-219101 (Patent Literature 1)). A mixed powder prepared by mixing a lubricant with a basic metal powder in a ratio of about 1 wt% is normally press-molded. Various other methods have been proposed to achieve higher density. These methods can be roughly classified into a method that improves the lubricant and a method that improves the press molding/sintering process.

Examples of the method that improves the lubricant include a method that utilizes a composite of carbon molecules obtained by combining a ball-like carbon molecule with a sheet-like carbon molecule as the lubricant (e.g., JP-A-2009-280908 (Patent Literature 2)), and a method that utilizes a lubricant having a penetration at 25°C of 0.3 to 10 mm (e.g., JP-A-2010-37632 (Patent Literature 3)). These methods aim at reducing the friction resistance between the metal powder and a die.

Examples of the method that improves the press molding/sintering process include a warm molding/sinter powder metallurgical technique (e.g., JP-A-2-156002 (Patent Literature 4)), a facilitated handling warm molding powder metallurgical technique (e.g., JP-A-2000-87104 (Patent Literature 5)), a double press/double sinter powder metallurgical technique (e.g., JP-A-4-231404 (Patent Literature 6)), and a single press/sinter powder metallurgical technique (e.g., JP-A-2001-181701 (Patent Literature 7)).

According to the warm molding/sinter powder metallurgical technique, a metal powder into which a solid lubricant and a liquid lubricant are mixed is pre-heated to melt part or the entirety of the lubricant, and disperse the lubricant between the metal powder particles. This technique thus reduces the inter-particle friction resistance and the friction resistance between the particles and a die to improve formability. According to the facilitated handling warm molding powder metallurgical technique, a mixed powder is pressed before performing a warm molding step to form a primary molded body having low density (e.g., density ratio: less than 76%) that allows handling (primary molding step), and the primary formed body is subjected to a secondary molding step at a temperature lower than the temperature at which blue shortness occurs while breaking the primary molded body to obtain a secondary molded body (green compact). According to the double press/double sinter powder metallurgical technique, an iron powder mixture that contains an alloying component is compressed in a die to obtain a compressed body, the compressed body (green compact) is presintered at 870°C for 5 minutes, and compressed to obtain a presintered body, and the presintered body is sintered at 1000°C for 5 minutes to obtain a sintered body (part). According to the single press/sinter powder metallurgical technique, a die is pre-heated, and a lubricant is caused to electrically adhere to the inner side of the die. The die is filled with a heated iron-based powder mixture (iron-based powder+lubricant powder), and the powder mixture is press-molded at a given temperature to obtain an iron-based powder molded body. The iron-based powder molded body is sintered, and subjected to bright quenching and annealing to obtain an iron-based sintered body.

The density of the green compact achieved by the methods that improve the lubricant and the methods that improve the press molding/sintering process is about 7.4 g/cm³ (94% of the true density) at a maximum. The green compact exhibits insufficient mechanical strength when the density of the green compact is 7.4 g/cm³ or less. Since oxidation proceeds corresponding to the temperature and the time when applying the sintering process (high-temperature atmosphere), the lubricant coated with the powder particles burns, and a residue occurs, whereby the quality of the green compact obtained by press molding deteriorates. Therefore, it is considered that the density of the green compact is 7.3 g/cm³ or less. The methods that improve the lubricant and the methods that improve the press molding/sintering process are complex, may increase cost, and have a problem in that handling of the material is difficult or troublesome (i.e., it may be impractical).

In particular, when producing a magnetic core for an electromechanical device (e.g., motor or transformer) using a green compact, a satisfactory magnetic core may not be produced when the density of the green compact is 7.3 g/cm³ or less. It is necessary to further increase the density of a green compact in order to reduce loss (iron loss and hysteresis loss), and increase magnetic flux density (see the document presented by Toyota Central R & D Labs., Inc. in Autumn Meeting of Japan Society of Powder and Powder Metallurgy, 2009). Even when the density of the magnetic core is 7.5 g/cm³, for example, the magnetic properties and the mechanical strength of the magnetic core may be insufficient in practice.

A double molding/single sinter (anneal) powder metallurgical technique (e.g., JP-A-2002-343657 (Patent Literature 8)) has been proposed as a method for producing a magnetic-core green compact. This powder metallurgical technique is based on the fact that a magnetic metal powder that is coated with a coating that contains a silicone resin and a pigment does not show a decrease in insulating properties even if the magnetic metal powder is subjected to a high-temperature treatment. Specifically, a dust core is produced by pre-molding a magnetic metal powder that is coated with a coating that contains a silicone resin and a pigment to obtain a pre-molded body, subjecting the pre-molded body to a heat treatment at 500°C or more to obtain a heat-treated body, and compression-molding the heat-treated body. If the heat treatment temperature is less than 500°C, breakage may occur during compression molding. If the heat treatment temperature is more than 1000°C, the insulating coating may be decomposed (i.e., the insulating properties may be impaired). Therefore, the heat treatment temperature is set to 500 to 1000°C. The high-temperature treatment is performed under vacuum, an inert gas atmosphere, or a reducing gas atmosphere in order to prevent oxidation of the pre-molded body. A dust core having a true density of 98% (7.7 g/cm³) may be produced as described above.

### SUMMARY OF INVENTION

### TECHNICAL PROBLEM

However, the double molding/single sinter powder metallurgical technique (Patent Literature 8) is very complex, individualized, and difficult to implement as compared with the other techniques, and significantly increases the production cost. The double molding/single sinter powder metallurgical technique subjects the pre-molded body to a heat treatment at 500°C or more. The heat treatment is performed under such an atmosphere in order to prevent a situation in which the quality of the dust core deteriorates. Therefore, the double molding/single sinter powder metallurgical technique is not suitable for mass production. In particular, when using a vitreous film-coated magnetic metal powder, the vitreous material may be modified/melted.

The above methods and systems (Patent Literatures 1 to 8) can implement a sintering process at a relatively high temperature. However, the details of the press molding step achieved using the above methods and systems are unclear. Moreover, attempts to achieve a further improvement in connection with the specification and the functions of the press molding device, the relationship between pressure and density, and an analysis of the limitations thereof, have not been made.

As described above, a further increase in mechanical strength has been desired along with a reduction in size and weight of mechanical parts and the like, and there is an urgent need to develop a method and a system that can reliably, stably, and inexpensively produce a high-quality and high-density green compact (particularly a magnetic-core high-density green compact).

An object of the invention is to provide a mixed powder high-density molding method and a mixed powder high-density molding system that can produce a high-density green compact while significantly reducing the production cost by press-molding a mixed powder twice with a heating step interposed therebetween.

### SOLUTION TO PROBLEM

A green compact has been normally produced by a powder metallurgical technique, and subjected to a sintering process performed at a high temperature (e.g., 800°C or more). However, such a high-temperature sintering process consumes a large amount of energy (i.e., increases cost), and is not desirable from the viewpoint of environmental protection.

The press molding process molds a mixed powder to have a specific shape, and has been considered to be a mechanical process that is performed in the preceding stage of the high-temperature sintering process. The high-temperature sintering process is exceptionally omitted when producing a magnetic-core green compact used for an electromagnetic device (e.g., motor or transformer). This aims at preventing a deterioration in magnetic properties that may occur when the green compact is subjected to a high-temperature process. Specifically, the resulting product inevitably has unsatisfactory mechanical strength. Since the density of the product is insufficient when mechanical strength is insufficient, the product also has insufficient magnetic properties.

It is possible to significantly promote industrial utilization and widespread use of a green compact if a high-density green compact can be formed only by the press molding process without performing the high-temperature sintering process. The invention was conceived to produce a high-quality green compact in high yield based on studies of the effectiveness of a lubricant during pressing, the compression limit when using a lubricant powder, the spatial distribution of a lubricant powder in a mixed powder, the spatial distribution of a basic metal powder and a lubricant powder, the behavior of a basic metal powder and a lubricant powder, and the final disposition state of a lubricant, and analysis of the characteristics (e.g., compression limit) of a normal press molding device, and the effects of the density of a green compact on strength and magnetic properties.

Specifically, the invention may provide a method that fills a first die with a mixed powder prepared by mixing a lubricant powder into a basic metal powder, molds an intermediate green compact by performing a first press molding step while maintaining the lubricant in a powdery state, liquefies the lubricant by heating to change the state of the lubricant in the intermediate green compact, and molds a high-density final green compact having a density close to the true density by performing a second press molding step in a second die. In particular, a high-quality green compact can be stably produced while preventing occurrence of cracks during the second press molding step by setting the internal dimension of the first die to be smaller than the internal dimension of the second die by 1 to 5%. In other words, the invention may provide a novel powder metallurgical technique (i.e., a powder metallurgical technique that performs two press molding steps with a lubricant liquefaction step interposed therebetween) that differs from a known powder metallurgical technique that necessarily requires a high-temperature sintering process, and may provide an epoch-making and practical method and system that can reliably and stably produce a high-density green compact at low cost.
(1) According to a first aspect of the invention, a mixed powder high-density molding method includes:
   filling a first die with a mixed powder that is a mixture of a basic metal powder and a low-melting-point lubricant powder, an internal dimension of the first die being smaller than an internal dimension (=100%) of a second die by 1 to 5%;
   applying a first pressure to the mixed powder in the first die to form a mixed powder intermediate compressed body ;
   heating the mixed powder intermediate compressed body removed from the first die to the melting point of the lubricant powder;
   placing the heated mixed powder intermediate compressed body in a second die; and
   applying a second pressure to the mixed powder intermediate compressed body in the second die to form a high-density mixed powder final compressed body.
(2) In the mixed powder high-density molding method as defined in (1), the lubricant powder may have a low melting point within the range of 90 to 190°C.
(3) In the mixed powder high-density molding method as defined in (1) or (2), the second die may be pre-heated to the melting point before the mixed powder intermediate compressed body is placed in the second die.
(4) In the mixed powder high-density molding method as defined in (1) or (2), the second pressure may be selected to be equal to the first pressure.
(5) According to a second aspect of the invention, a mixed powder high-density molding system includes:
   a mixed powder feeding device that can externally feed a mixed powder that is a mixture of a basic metal powder and a low-melting-point lubricant powder;
   a first press molding device that applies a first pressure to the mixed powder, with which a first die has been filled using the mixed powder feeding device, to form a mixed powder intermediate compressed body;
   a heating device that heats the mixed powder intermediate compressed body removed from the first die to the melting point of the lubricant powder; and
   a second press molding device that applies a second pressure to the mixed powder intermediate compressed body that is placed in a second die to form a high-density mixed powder final compressed body, an internal dimension of the first die being smaller than an internal dimension of the second die by 1 to 5%.
(6) In the mixed powder high-density molding system as defined in (5), the heating device and the second press molding device may be formed by a heating/press molding device that functions as the heating device and the second press molding device, the heating/press molding device may include a plurality of heating/press molding sub-devices, and each of the plurality of heating/press molding sub-devices may be selectively and sequentially operated in each cycle.
(7) The mixed powder high-density molding system as defined in (5) may further include a pre-heating device that pre-heats the second die.
(8) The mixed powder high-density molding system as defined in (5) may further include a workpiece transfer device that transfers the mixed powder intermediate compressed body formed by the first press molding device to the heating device, transfers the mixed powder intermediate compressed body heated by the heating device to the second press molding device, and transfers the mixed powder final compressed body formed by the second press molding device to a discharge section.

### ADVANTAGEOUS EFFECTS OF THE INVENTION

The mixed powder high-density molding method as defined in (1) can reliably and stably produce a high-density green compact while significantly reducing the production cost. It is also possible to produce a high-quality green compact having no cracks in high yield.

The mixed powder high-density molding method as defined in (2) makes it possible to ensure that the lubricant produces a sufficient lubricating effect during the first press molding step while suppressing oxidation of the basic metal powder. It is also possible to selectively use a wide variety of lubricants.

The mixed powder high-density molding method as defined in (3) makes it possible to further improve the fluidity of the melted lubricant in all directions during the second press molding step, and significantly reduce the friction resistance between the basic metal particles and the friction resistance between the basic metal particles and the second die.

The mixed powder high-density molding method as defined in (4) makes it possible to easily implement the press molding step, facilitate handling, and indirectly reduce the green compact production cost.

The mixed powder high-density molding system as defined in (5) can reliably implement the mixed powder high-density molding method as defined in any one of (1) to (4), can be easily implemented, and facilitates handling. The mixed powder high-density molding system can efficiently produce a high-quality green compact having no cracks.

The mixed powder high-density molding system as defined in (6) makes it possible to simplify the system as compared with the configuration as defined in (5). It is also possible to simplify the production line, and further facilitate handling.

The mixed powder high-density molding system as defined in (7) makes it possible to allow the temperature of the mixed powder intermediate compressed body to be within a given temperature range even when the temperature of the mixed powder intermediate compressed body decreases until the final green compact molding start timing occurs, and achieve a good molding effect.

Since the mixed powder high-density molding system as defined in (8) includes the workpiece transfer device, it is possible to reliably transfer the workpiece in the area between the first press molding device and the heating device, the area between the heating device and the second press molding device, and the area between the second press molding device and the discharge section.

Further features and advantageous effects of the invention will become apparent from the following description.

### BRIEF DESCRIPTION OF DRAWINGS

FIG. 1 is a diagram illustrating a high-density molding method according to one embodiment of the invention.
FIG. 2 is a front view illustrating a high-density molding system according to a first embodiment of the invention, and its operation.
FIG. 3A is a view illustrating a mixed powder high-density molding operation according to the first embodiment of the invention, and illustrates a state in which an intermediate green compact is molded using a first die.
FIG. 3B is a view illustrating a mixed powder high-density molding operation according to the first embodiment of the invention, and illustrates a state in which a first die is filled with a mixed powder.
FIG. 4 is a graph illustrating the relationship between pressure and density obtained at the pressure (first embodiment of the invention), wherein a broken line (characteristics A) indicates a molding state using a first die, and a solid line (characteristics B) indicates a molding state using a second die.
FIG. 5A is an external perspective view illustrating a final green compact (intermediate green compact) according to the first embodiment of the invention having a ring-like shape.
FIG. 5B is an external perspective view illustrating a final green compact (intermediate green compact) according to the first embodiment of the invention having a cylindrical shape.
FIG. 5C is an external perspective view illustrating a final green compact (intermediate green compact) according to the first embodiment of the invention having a narrow round shaft shape.
FIG. 5D is an external perspective view illustrating a final green compact (intermediate green compact) according to the first embodiment of the invention having a disc-like shape.
FIG. 5E is an external perspective view illustrating a final green compact (intermediate green compact) according to the first embodiment of the invention having a complex shape.
FIG. 6 is a diagram schematically illustrating an upper die (upper punch) and a lower die (die and lower punch) for molding a disc-like final green compact according to the first embodiment of the invention.
FIG. 7 is a graph illustrating a crack occurrence region according to the first embodiment of the invention.
FIG. 8A is a plan view illustrating a disc-like intermediate green compact according to the first embodiment of the invention.
FIG. 8B is a plan view illustrating a disc-like final green compact in which cracks have occurred according to the first embodiment of the invention.
FIG. 9 is a front view illustrating a high-density molding system (and its operation) according to a second embodiment of the invention.

### DESCRIPTION OF EMBODIMENTS

Exemplary embodiments of the invention are described in detail below with reference to the drawings.

### First embodiment

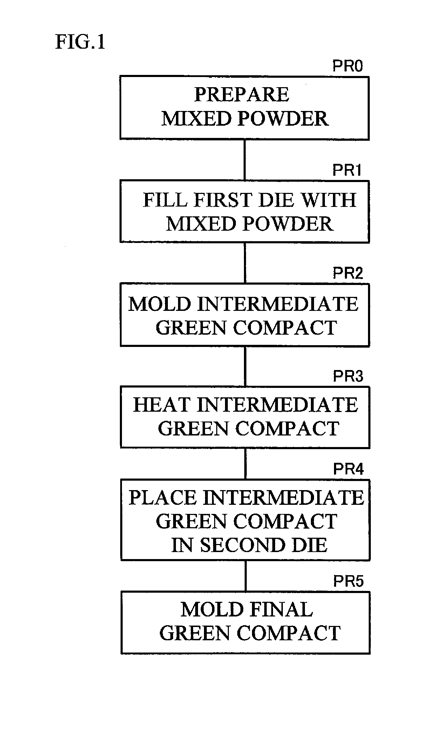

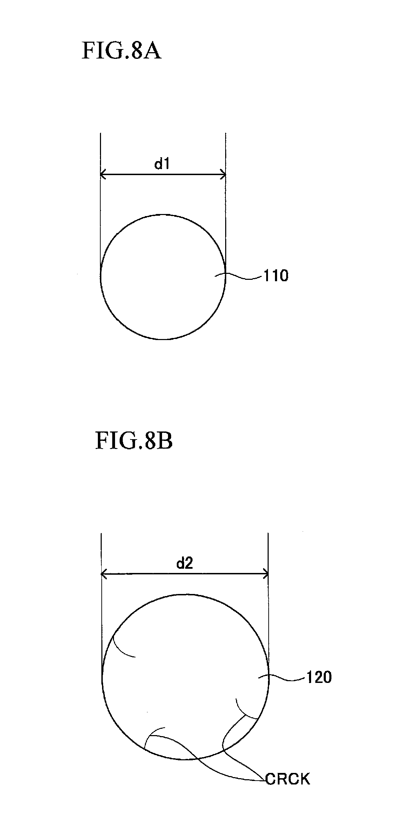

As illustrated in FIGS. 1 to 8B, a mixed powder high-density molding system 1 includes a mixed powder feeding device 10, a first press molding device 20, a heating device 30, and a second press molding device 40, and stably and reliably implements a mixed powder high-density molding method that includes a mixed powder-filling step (PR1) that fills a first die (lower die 21) with a mixed powder 100 that is prepared by mixing a low-melting-point lubricant powder with a basic metal powder, an intermediate green compact-forming step (PR2) that applies a first pressure (P1) to the mixed powder 100 in the first die (lower die 21) to form a mixed powder intermediate compressed body (hereinafter may be referred to as "intermediate green compact 110"), a heating step (PR3) that heats the intermediate green compact 110 removed from the first die (lower die 21) to the melting point of the lubricant powder, a step (PR4) that places the heated intermediate green compact 110 in a second die (lower die 41), and a final green compact-forming step (PR5) that applies a second pressure P2 to the intermediate green compact 110 in the second die (lower die 41) to form a high-density mixed powder final compressed body (hereinafter may be referred to as "final green compact 120"). The mixed powder high-density molding system 1 is designed so that a high-quality green compact (final green compact 120) having no cracks can be produced in high yield as a result of setting the internal dimension (diameter d1) of the first die to be smaller than the internal dimension (diameter d2) of the second die by 1 to 5%.

The mixed powder 100 is a mixture of the basic metal powder and the low-melting-point lubricant powder. The basic metal powder may include only one type of main metal powder, or may be a mixture of one type of main metal powder and one or more types of alloying component powder. The expression "low melting point" used herein in connection with the lubricant powder refers to a temperature (melting point) that is significantly lower than the melting point (temperature) of the basic metal powder, and can significantly suppress oxidation of the basic metal powder.

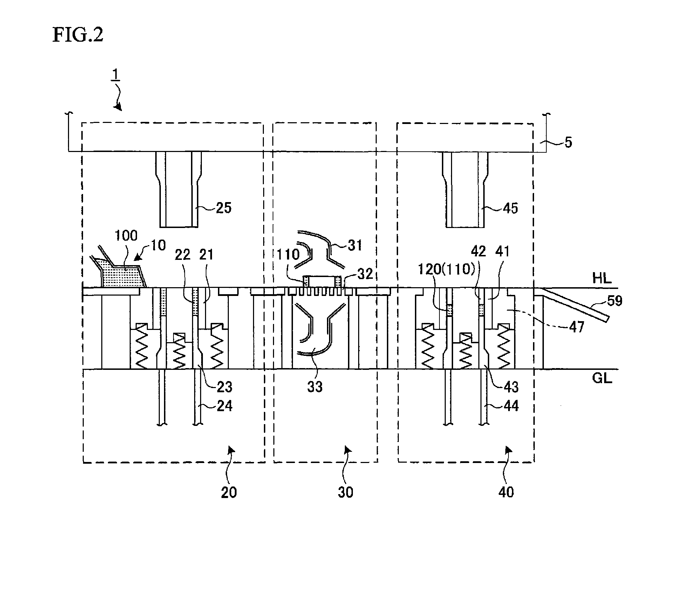

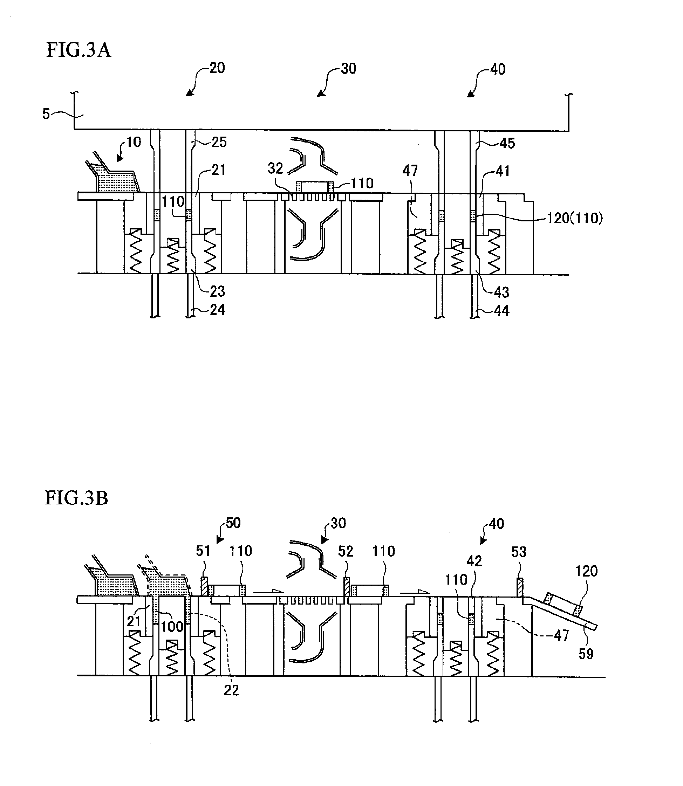

As illustrated in FIG. 2 that shows the high-density molding system 1, the mixed powder feeding device 10 is disposed on the leftmost side (upstream side) of a high-density molding line. The mixed powder feeding device 10 feeds the mixed powder 100 to the first die (lower die 21) included in a first press molding device 20 to fill a cavity 22 of the first die (lower die 21) with the mixed powder 100. The mixed powder feeding device 10 has a function of holding a constant amount of the mixed powder 100, and a function of feeding a constant amount of the mixed powder 100. The mixed powder feeding device 10 can selectively move between the initial position (i.e., the position indicated by the solid line in FIGS. 2 and 3A) and the position over the first die (lower die 21) (i.e., the position indicated by the broken line in FIG. 3B).

Since it is important to uniformly and sufficiently fill the first die (lower die 21) with the mixed powder 100, the mixed powder 100 must be in a dry state. Specifically, since the shape of the internal space (cavity 22) of the first die (lower die 21) corresponds to the shape of the product, it is necessary to uniformly and sufficiently fill the first die with the mixed powder 100 in order to ensure the dimensional accuracy of the intermediate green compact 110, even if the product has a complex shape, or has a narrow part.

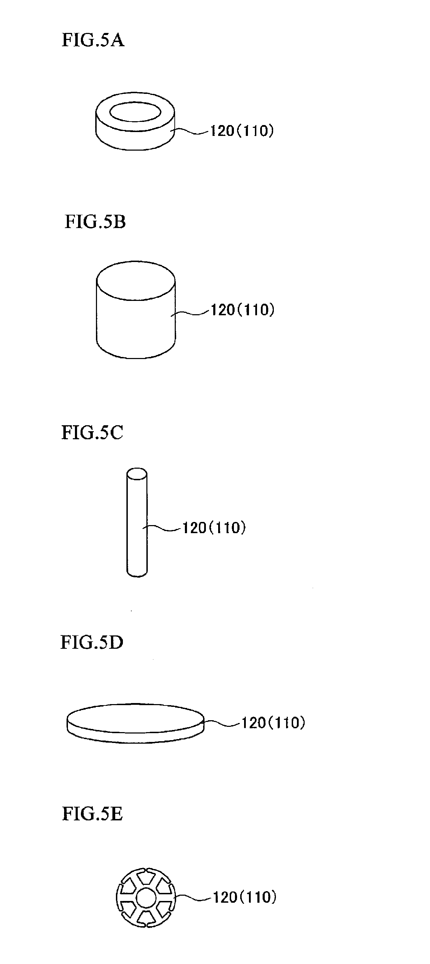

The configuration (dimensions and shape) of the final green compact 120 (intermediate green compact 110) is not particularly limited. FIGS. 5A to 5E illustrate examples of the configuration (dimensions and shape) of the final green compact 120 (intermediate green compact 110). FIG. 5A illustrates the final green compact 120 (intermediate green compact 110) having a ring-like shape, FIG. 5B illustrates the final green compact 120 (intermediate green compact 110) having a cylindrical shape, FIG. 5C illustrates the final green compact 120 (intermediate green compact 110) having a narrow round shaft shape, FIG. 5D illustrates the final green compact 120 (intermediate green compact 110) having a disc-like shape, and FIG. 5E illustrates the final green compact 120 (intermediate green compact 110) having a complex shape.

Specifically, an upper die 25 and the cavity 22 of the lower die 21 of the first press molding device 20 have a shape corresponding to the configuration (shape) of the intermediate green compact 110. When the intermediate green compact 110 has the configuration (shape) illustrated in FIG. 5A, 5B, 5C, 5D, or 5E, the upper die (upper punch) 25 and the cavity 22 of the lower die 21 have a shape corresponding to the configuration (shape) of the intermediate green compact 110. When the intermediate green compact 110 has the ring-like shape illustrated in FIG. 5A, the upper die (upper punch) 25 has a cylindrical shape, and the lower die 21 has a hollow cylindrical shape (see FIGS. 2, 3A, and 3B). When the intermediate green compact 110 has the cylindrical shape illustrated in FIG. 5B, the upper die (upper punch) 25 has a solid cylindrical shape, and the lower die 21 has a hollow cylindrical shape. This also applies to the case where the intermediate green compact 110 has the narrow round shaft shape illustrated in FIG. 5C, or the disc-like shape illustrated in FIG. 5D (except for the depth). When the intermediate green compact 110 has the complex shape illustrated in FIG. 5E, the upper die (upper punch) 25 and the lower die 21 have the corresponding complex shape. This also applies to an upper die (upper punch) 45 and a cavity 42 of a lower die 41 of the second press molding device 40.

A solid lubricant that is in a dry state (fine particulate) (i.e., powdery state) at room temperature is used as the lubricant that is used to reduce the friction resistance between the basic metal particles and the friction resistance between the basic metal powder and the inner side of the die. For example, since the mixed powder 100 exhibits high viscosity and low fluidity when using a liquid lubricant, it is difficult to uniformly and sufficiently fill the first die with the mixed powder 100.

It is also necessary for the lubricant to be solid and stably maintain a given lubricating effect during the intermediate green compact molding step that is performed using the first die (lower die 21) at room temperature while applying the first pressure P1. The lubricant must stably maintain a given lubricating effect even if the temperature has increased to some extent as a result of applying the first pressure P1.

On the other hand, the melting point of the lubricant powder must be significantly lower than the melting point of the basic metal powder from the viewpoint of the relationship with the heating step (PR3) performed after the intermediate green compact molding step, and suppression of oxidation of the basic metal powder.

In the first embodiment, the lubricant powder has a low melting point within the range of 90 to 190°C. The lower-limit temperature (e.g., 90°C) is selected to be higher to some extent than the upper-limit temperature (e.g., 80°C) of a temperature range (e.g., 70 to 80°C) that is not reached even if the temperature has increased to some extent during the intermediate green compact molding step, while taking account of the melting point (e.g., 110°C) of other metallic soaps. This prevents a situation in which the lubricant powder is melted (liquefied) and flows out during the intermediate green compact molding step.

The upper-limit temperature (e.g., 190°C) is selected to be a minimum value from the viewpoint of lubricant powder selectivity, and is selected to be a maximum value from the viewpoint of suppression of oxidation of the basic metal powder during the heating step. Specifically, it should be understood that the lower-limit temperature and the upper-limit temperature of the above temperature range (90 to 190°C) are not threshold values, but are boundary values.

This makes it possible to selectively use an arbitrary metallic soap (e.g., zinc stearate or magnesium stearate) as the lubricant powder. Note that a viscous liquid such as zinc octylate cannot be used since the lubricant must be in a powdery state.

In the first embodiment, a zinc stearate powder having a melting point of 120°C is used as the lubricant powder. Note that the invention does not employ a configuration in which a lubricant having a melting point lower than the die temperature during press molding is used, and the press molding step is performed while melting (liquefying) the lubricant (see Patent Literature 7). If the lubricant is melted and flows out before completion of molding of the intermediate green compact 110, lubrication tends to be insufficient during the molding step, and sufficient press molding cannot be performed reliably and stably.

The lubricant powder is used in an amount that is selected based on an empirical rule determined by experiments and actual production. The lubricant powder is used in an amount of 0.08 to 0.23 wt% based on the total amount of the mixed power taking account of the relationship with the intermediate green compact-forming step (PR2). When the amount of the lubricant powder is 0.08 wt%, the lubricating effect can be maintained when molding the intermediate green compact 110. When the amount of the lubricant powder is 0.23 wt%, the desired compression ratio can be obtained when forming the intermediate green compact 110 from the mixed powder 100.

A practical amount of the lubricant powder must be determined taking account of the true density ratio of the intermediate green compact 110 that is molded in the first die (lower die 21) while applying the first pressure, and a sweating phenomenon that occurs in the second die (lower die 41). It is also necessary to prevent dripping (dripping phenomenon) of the liquefied lubricant from the die toward the outside that causes a deterioration in the work environment.

In the first embodiment, since the true density ratio (i.e., the ratio with respect to the true density (=100%)) of the intermediate green compact 110 is set to 80 to 90%, the ratio (amount) of the lubricant powder is set to 0.1 to 0.2 wt%. The upper limit (0.2 wt%) is determined from the viewpoint of preventing the dripping phenomenon, and the lower limit (0.1 wt%) is determined from the viewpoint of ensuring a necessary and sufficient sweating phenomenon. The ratio (amount) of the lubricant powder is very small as compared with the related-art example (1 wt%), and the industrial applicability can be significantly improved.

It is very important to prevent the dripping phenomenon during actual production. A large amount of lubricant powder tends to be mixed in the planning stage and the research stage in order to prevent a situation in which the lubricant powder runs short from the viewpoint of reducing frictional resistance during pressing. Since whether or not a high density of more than 7.3 g/cm³ can be achieved is determined by trial and error, for example, a situation in which excess lubricant is liquefied and flows out from the die is not taken into consideration. The dripping phenomenon is also not taken into consideration. Since dripping of the liquefied lubricant increases the lubricant cost, decreases productivity due to a deterioration in the work environment, and increases the burden imposed on the workers, it is impossible to ensure practical and widespread use without preventing the dripping phenomenon.

When the intermediate green compact 110 obtained by compressing the mixed powder 100 including 0.2 wt% of the lubricant powder to have a true density ratio of 80% is heated to the melting point of the lubricant powder in the heating step (PR3), the powder lubricant scattered in the intermediate green compact 110 is melted to fill the voids between the metal powder particles, passes through the voids between the metal powder particles, and uniformly exudes through the surface of the intermediate green compact 110. Specifically, the sweating phenomenon occurs. When the intermediate green compact 110 is compressed in the second die (lower die 41) by applying the second pressure P2, the frictional resistance between the basic metal powder and the inner wall of the cavity is significantly reduced.

The sweating phenomenon similarly occurs when using the intermediate green compact 110 obtained by compressing the mixed powder 100 including 0.1 wt% of the lubricant powder to have a true density ratio of 90%, or when using the intermediate green compact 110 obtained by compressing the mixed powder 100 including more than 0.1 wt% and less than 0.2 wt% of the lubricant powder to have a true density ratio of more than 80% and less than 90%. It is also possible to prevent the dripping phenomenon.

This makes it possible to produce a green compact (e.g., magnetic core) that can be molded to have high density, and has sufficient magnetic properties and mechanical strength, and prevent a situation in which the die breaks. Moreover, the consumption of the lubricant can be significantly reduced, and a situation in which the liquid lubricant drips from the die can be prevented, so that a good work environment can be achieved. Since the green compact production cost can be reduced while improving productivity, the industrial applicability can be significantly improved.

Note that Patent Literatures 1 to 8 are silent about the relationship between the lubricant content and the compression ratio of the mixed powder, and the dripping phenomenon and the sweating phenomenon that may occur depending on the lubricant content.

Patent Literature 5 (warm powder metallurgical technique) discloses producing a primary molded body having a density ratio of less than 76% in order to facilitate handling, and does not disclose technical grounds relating to high-density molding and items that can be implemented. Since the secondary molded body is produced in Patent Literature 5 after breaking the primary molded body, Patent Literature 5 does not employ a technical idea that achieves an increase in density through primary molding and secondary molding.

The first press molding device 20 applies the first pressure P1 to the mixed powder 100 with which the first die (lower die 21) has been filled using the mixed powder feeding device 10, to form the mixed powder intermediate compressed body (intermediate green compact 110). In the first embodiment, the first press molding device 20 has a press structure.

As illustrated in FIG. 2, the first die includes the lower die 21 that is situated on the side of a bolster, and the upper die (upper punch) 25 that is situated on the side of a slide 5. In FIGS. 2, 3A, and 3B that illustrate the first press molding device 20 (first die) and the flow of the basic process, the cavity 22 of the lower die 21 has a shape (hollow cylindrical shape) corresponding to the shape (ring-like shape) of the intermediate green compact 110 illustrated in FIG. 5A. The upper die (upper punch) 25 has such a shape (cylindrical shape) that the upper die (upper punch) 25 can be pushed into the lower die 21 (cavity 22), and is moved upward and downward using the slide 5. A movable member 23 is fitted into the lower side of the cavity 22 so that the movable member 23 can move in the vertical direction.

When the intermediate green compact 110 has the shape illustrated in FIG. 5B, 5C, 5D, or 5E, the upper die (upper punch) 25 and the cavity 22 of the lower die 21 of the first press molding device 20 also have a shape corresponding to the shape of the intermediate green compact 110.

When the intermediate green compact 110 has the cylindrical shape illustrated in FIG. 5B, the upper die (upper punch) 25 has a solid cylindrical shape, and the lower die 21 has a hollow cylindrical shape. When the intermediate green compact 110 has the circular rod-like shape illustrated in FIG. 5C, the upper die (upper punch) 25 has a solid cylindrical shape that is long in the vertical direction, and the lower die 21 has a hollow cylindrical shape that is long in the vertical direction. When the intermediate green compact 110 has the cylindrical shape illustrated in FIG. 5D, the upper die (upper punch) 25 has a solid cylindrical shape that is long in the vertical direction, and the lower die 21 has a hollow cylindrical shape that is long in the vertical direction. When the intermediate green compact 110 has the complex shape illustrated in FIG. 5E, the upper die (upper punch) 25 and the lower die 21 have the corresponding complex shape. This also applies to the upper die (upper punch) 45 and the cavity 42 of the lower die 41 of the second press molding device 40.

In Fig. 2, the movable member 23 is moved upward using a knockout pin (not illustrated in the drawings) that moves upward through a through-hole 24 that is formed under a ground level GL. The intermediate green compact 110 in the first die (lower die 21 (cavity 22)) can thus be moved upward to a transfer level HL. The movable member 23 functions as a first ejection device for ejecting the intermediate green compact 110 in the first die (lower die 21) to the outside (transfer level HL). The movable member 23 and the knockout pin are returned to the initial position after the intermediate green compact 110 has been transferred to the heating device 30. Note that the first ejection device may be implemented using another device.

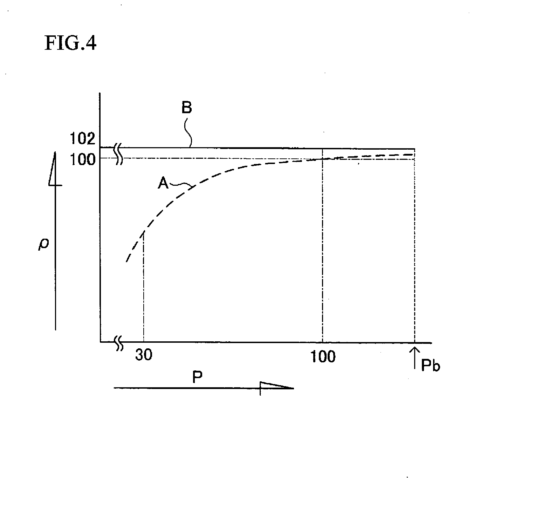

The relationship between the pressure P (first pressure P1) applied by the first press molding device 20 and the true density ratio (density p) of the resulting intermediate green compact 110 is described below with reference to FIG. 4. The horizontal axis indicates the pressure P using an index. In the first embodiment, the maximum capacity (pressure P) is 10 tons/cm² (horizontal axis index: 100). Reference sign Pb indicates the die breakage pressure at which the horizontal axis index is 140 (14 tons/cm²). The vertical axis indicates the true density ratio (density p) using an index. A vertical axis index of 100 corresponds to a true density ratio (density p) of 97% (7.6 g/cm³).

In the first embodiment, the basic metal powder is a magnetic-core vitreous insulating film-coated iron powder (true density: 7.8 g/cm³), the lubricant powder is a zinc stearate powder (0.1 to 0.2 wt%), and the first pressure P1 is selected so that the mixed powder intermediate compressed body can be compressed to have a true density ratio of 80 to 90% corresponding to a vertical axis index of 82 to 92 (corresponding to a density ρ of 6.24 to 7.02 g/cm³).

A vertical axis index of 102 corresponds to a density ρ of 7.75 g/cm³ and a true density ratio (density p) of 99%.

Note that the basic metal powder may be a magnetic-core iron-based amorphous powder (magnetic-core Fe-Si alloy powder), a magnetic-core iron-based amorphous powder, a magnetic-core Fe-Si alloy powder, a pure iron powder for producing mechanical parts, or the like.

The density ρ achieved by the first press molding device 20 increases along the characteristics A indicated by the broken line (curve) in Fig. 4 as the first pressure P1 increases. The density ρ reaches 7.6 g/cm³ when the horizontal axis index (first pressure is P1) is 100. The true density ratio is 97%. The density ρ increases to only a small extent even if the first pressure P1 is further increased. The die may break if the first pressure P1 is further increased.

When the density p achieved by pressing at the maximum capacity of the press molding device (press) is not satisfactory, it has been necessary to provide a larger press. However, the density µp increases to only a small extent even if the maximum capacity is increased by a factor of 1.5, for example. Therefore, it has been necessary to accept a low density ρ (e.g., 7.5 g/cm³) when using an existing press.

It is possible to achieve a major breakthrough if the vertical axis index can be increased from 100 (7.6 g/cm³) to 102 (7.75 g/cm³) by directly utilizing an existing press. Specifically, it is possible to significantly (hyperbolically) improve magnetic properties, and also significantly improve mechanical strength if the density ρ can be increased by 2%. Moreover, since a sintering process at a high temperature can be made unnecessary, oxidation of the green compact can be significantly suppressed (i.e., a decrease in magnetic core performance can be prevented).

In order to achieve the above breakthrough, the high-density molding system 1 is configured so that the intermediate green compact 110 formed by the first press molding device 20 is heated to promote melting (liquefaction) of the lubricant, and the second press molding device 40 then performs the second press molding process. A high density (7.75 g/cm³) ρ that corresponds to a vertical axis index of 102 (see the characteristics B indicated by the solid line in FIG. 4) can be achieved by pressing the intermediate green compact 110 using the second press molding device 40. The details thereof are described later in connection with the second press molding device 40.

The heating device 30 is a device that heats the mixed powder intermediate compressed body (intermediate green compact) 110 removed from the first die (lower die 21) to the melting point of the lubricant powder. As illustrated in FIG. 2, the heating device 30 includes a hot air generator (not illustrated in FIG. 2), a blow hood 31, an exhaust/circulation hood 33, and the like. The heating device 30 blows hot air against the intermediate green compact 110 that is positioned using a wire-mesh holding member 32 to heat the intermediate green compact 110 to the melting point (120°C) of the lubricant powder.

The technical significance of the above low-temperature heat treatment is described below in connection with the relationship with the first press molding process. The powder mixture 100 with which the lower die 21 (cavity 22) is filled has an area in which the lubricant powder is relatively thinly present (thin area), and an area in which the lubricant powder is relatively densely present (dense area) in connection with the basic metal powder. The friction resistance between the basic metal particles, and the friction resistance between the basic metal powder and the inner side of the die can be reduced in the dense area. In contrast, the friction resistance between the basic metal particles, and the friction resistance between the basic metal powder and the inner side of the die increase in the thin area.

When the first press molding device 20 applies a pressure to the mixed powder, compressibility is predominant (i.e., compression easily occurs) in the dense area due to low friction. In contrast, compressibility is poor (i.e., compression slowly occurs) in the thin area due to high friction. Therefore, a compression difficulty phenomenon corresponding to the preset first pressure P1 occurs (i.e., compression limit). In this case, when the fracture surface of the intermediate green compact 110 removed from the first die (lower die 21) is magnified, the basic metal powder is integrally pressure-welded in the dense area. However, the lubricant powder is also present in the dense area. In the thin area, small spaces remain in the pressure-welded basic metal powder, and almost no lubricant powder is observed in the thin area.

Therefore, it is possible to form compressible spaces by removing the lubricant powder from the dense area.

It is possible to improve the compressibility of the thin area by supplying the lubricant to the spaces formed in the thin area.

Specifically, the lubricant powder is melted (liquefied), and increased in fluidity by heating the intermediate green compact 110 subjected to the first press molding process to the melting point (e.g., 120°C) of the lubricant powder. The lubricant that flows out from the dense area penetrates through the peripheral area, and is supplied to the thin area. This makes it possible to reduce the friction resistance between the basic metal particles, and compress the spaces that have been occupied by the lubricant powder. It is also possible to reduce the friction resistance between the basic metal powder and the inner side of the die.

The second press molding device 40 is a device that applies the second pressure P2 to the heated intermediate green compact 110 placed in the second die (lower die 41) to form the high-density final green compact 120.

In the first embodiment, a function of pre-heating the second die (lower die 41) is provided. Note that the high-density molding method according to the invention can be implemented without pre-heating the second die (lower die 41) as long as the temperature of the heated intermediate green compact 110 is within a given temperature range in which no problem occurs until the final green compact molding start timing at which the second pressure P2 is applied.

However, when the heat capacity of the intermediate green compact 110 is small, or when it takes time to transfer the intermediate green compact 110 to the second die (lower die 41), or the intermediate green compact 110 is transferred to the second die (lower die 41) along a long transfer path, or when the temperature of the heated intermediate green compact 110 decreases until the final green compact molding start timing occurs due to the composition of the mixed powder 100, the configuration (shape) of the intermediate green compact 110, or the like, a good molding effect can be obtained by pre-heating the second die (lower die 41). A second pre-heating device 47 (described later) is provided to pre-heat the second die (lower die 41).

In the first embodiment, the maximum capacity (pressure P) of the second press molding device 40 is the same as that (10 tons/cm²) of the first press molding device 20. The first press molding device 20 and the second press molding device 40 are configured as a single press, and the upper die 25 and the upper die 45 can be moved upward and downward in synchronization using the common slide 5 illustrated in FIG. 2. The above configuration is economical, and can reduce the production cost of the final green compact 120.

As illustrated in FIG. 2, the second die includes the lower die 41 that is situated on the side of the bolster, and the upper die (punch) 45 that is situated on the side of the slide 5. The lower part of the cavity 42 of the lower die 41 has a shape (cylindrical shape) corresponding to the shape (ring-like shape) of the final green compact 120, and the upper part of the cavity 42 has a slightly larger shape so that the intermediate green compact 110 can be placed therein. The upper die 45 can be pushed into the lower die 41 (cavity 42), and is moved upward and downward using the slide 5. A movable member 43 is fitted into the lower side of the cavity 42 so that the movable member 43 can move in the vertical direction. Note that the second die (lower die 41) and the first die (lower die 21) are adjusted in height (position) corresponding to the vertical difference in dimensions between the compression targets (intermediate green compact 110 and final green compact 120).

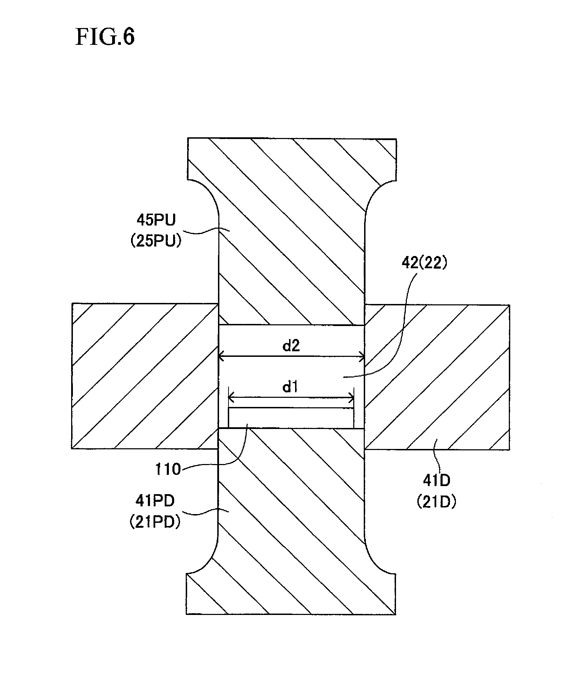

When molding the disc-like mixed powder final compressed body (final green compact 120) illustrated in FIG. 5D, the upper die 45 (upper punch 45PU) illustrated in FIG. 6 has a solid cylindrical shape, the lower die 41 includes a second die 41D having a hollow cylindrical shape, and a lower punch 41PD having a solid cylindrical shape, and the cavity 42 has a hollow cylindrical shape.

The movable member 43 is moved upward using a knockout pin (not illustrated in the drawings) that moves upward through a through-hole 44 that is formed under the ground level GL. The final green compact 120 in the second die (lower die 41 (cavity 42)) can thus be moved upward to the transfer level HL. The movable member 43 functions as a second ejection device for ejecting the final green compact 120 in the second die (lower die 41 (cavity 42)) to the outside (transfer level HL). Note that the second ejection device may be implemented using another device. The movable member 43 and the knockout pin are returned to the initial position after the final green compact 120 has been discharged to a discharge chute 59, and a new intermediate green compact 110 has been received from the heating device 30.

The second die (lower die 41) is provided with the per-heating device 47 that can be changed in heating temperature. The pre-heating device 47 heats (pre-heats) the second die (lower die 41 (cavity 42)) to the melting point (120°C) of the lubricant powder (zinc stearate) before the intermediate green compact 110 is placed in the second die (lower die 41 (cavity 42)). Therefore, the heated intermediate green compact 110 can be placed in the second die (lower die 41 (cavity 42)) without allowing the intermediate green compact 110 to cool. This makes it possible to ensure a lubricating effect while preventing a situation in which the lubricant that has been melted (liquefied) is solidified. In the first embodiment, the second pre-heating device 47 is implemented using an electric heating system (electric heater). Note that the second pre-heating device 47 may also be implemented using a hot oil/hot water circulation heating device or the like.

The second pre-heating device 47 can heat the second die until the final green compact 120 is obtained. Therefore, the fluidity of the melted lubricant in all directions can be further improved during press molding, and the friction resistance between the basic metal particles and the friction resistance between the basic metal particles and the second die (lower die 41) can be significantly reduced.

In the first embodiment, a pre-heating device (not illustrated in the drawings) for pre-heating the first die (lower die 21) is also provided. Note that the high-density molding method according to the invention can be implemented without pre-heating the intermediate green compact 110 by pre-heating the first die (lower die 21) before the heating step.

However, when the composition of the mixed powder 100 or the configuration (shape) of the intermediate green compact 110 is unique, or when the heat capacity of the intermediate green compact 110 is large, or when it is difficult to provide a large heating device 30, or when the temperature of the work environment is low, it may take time to heat the intermediate green compact 110. In such a case, it is desirable to pre-heat the first die (lower die 21). In the first embodiment, the first die is pre-heated for the above reason.

Specifically, a first pre-heating device (not illustrated in the drawings) that can be adjusted in heating temperature is provided to the first die (lower die 21 (cavity 22)), and the first die (lower die 21) is pre-heated after the intermediate green compact 110 has been obtained, but before the intermediate green compact 110 is transferred to the heating device 30 to pre-heat the lubricant powder. This makes it possible to reduce the heating time, and reduce the production cycle.

The relationship between the pressure (second pressure P2) applied by the second press molding device 40 and the density ρ of the resulting final green compact 120 is described below with reference to FIG. 4.

The density ρ achieved by the second press molding device 40 has the characteristics B indicated by the solid line in FIG. 4. Specifically, the density ρ does not gradually increase as the second pressure P2 increases, differing from the case of using the first press molding device 20 (see the characteristics A (broken line)). More specifically, the density ρ does not increase until the final first pressure P1 (e.g., horizontal axis index: 50, 75, or 85) during the first press molding step is exceeded. The density ρ increases rapidly when the second pressure P2 has exceeded the final first pressure P1. This means that the second press molding step is performed continuously with the first press molding step.

Therefore, the first press molding step need not be performed in a state in which the first pressure P1 is necessarily increased to a value (horizontal axis index: 100) corresponding to the maximum capacity. This makes it possible to prevent unnecessary time and energy consumption that may occur when the first press molding step is continued after the compression limit has been reached. Therefore, the production cost can be reduced. Moreover, since it is possible to avoid overloaded operation in which the horizontal axis index exceeds 100, breakage of the die does not occur. This makes it possible to ensure easy and stable operation.

A workpiece transfer device 50 can transfer the intermediate green compact 110 removed from the first die (lower die 21) using the first ejection device (movable member 23 and through-hole 24) to a given position within the heating device 30, can transfer the heated intermediate green compact 110 from the heating device 30 to the second die 41 (lower die 41), and can transfer the final green compact 120 removed from the second die 41 (lower die 41) using the second ejection device (movable member 43 and through-hole 44) to a discharge section (e.g., discharge chute 59) that discharges the final green compact 120 to the outside of the high-density molding system 1. The workpiece transfer device 50 can reliably transfer the workpiece in the area between the first press molding device 20 and the heating device 30, the area between the heating device 30 and the second press molding device 40, and the area between the second press molding device 40 and the discharge chute 59.

In the first embodiment, the workpiece transfer device 50 is formed by three transfer bars 51, 52, and 53 (see FIG. 3B) that are operated in synchronization. The transfer bars 51, 52, and 53 are moved to the front transfer line (FIG. 3B) from the deep side in FIG. 3A when a transfer request has been issued, moved from left to right, and then returned to the original position. A placement device (transfer bar 52, movable member 43, and through-hole 44) places the heated mixed powder intermediate compressed body (intermediate green compact 110) in the second die (cavity 42) that is pre-heated to the melting point of the lubricant powder.

Note that the workpiece transfer device may be implemented by a transfer device that includes a finger that is driven in two-dimensional or three-dimensional directions, and the like, and sequentially transfers the workpiece to each die or the like.

Technical features that ensure an increase in quality are described below. The configuration (shape) of the final green compact 120 (intermediate green compact 110) is not particularly limited. Note that an example in which the final green compact 120 has the disc-like shape illustrated in FIG. 8 (i.e., the same shape as that illustrated in FIG. 5D) is described below for convenience of explanation with regard to prevention of cracks.

In FIG. 6 that schematically illustrates the second press molding device 40 (first press molding device 20), the lower die that forms the second die includes the second die 41D and the lower punch 41PD, and the upper die includes the upper punch 45PU. The internal space (cavity 42) of the second die has a shape corresponding to the configuration (disc-like shape) of the final green compact 120. Likewise, the first die includes the lower die (first die 21D and lower punch 21PD) and the upper die (upper punch 25PU). The internal space (cavity 22) of the first die (lower die 21) has a shape corresponding to the configuration (disc-like shape) of the intermediate green compact 110.

Specifically, when molding a disc-like green compact (intermediate green compact 110 or final green compact 120), the shape of each green compact (110 or 120) is specified by the external dimension (diameter d1 or d2), and the shape of each cavity (22 or 24) is specified by the internal dimension (diameter d1 or d2) (see FIGS. 8A and 8B). The internal dimension d2 of the second die (second die 41D) is larger than the internal dimension d1 of the first die (first die 21D). This is because it is necessary to insert the intermediate green compact 110 having the diameter d1 into the second die having the internal dimension d2. Note that the external dimension is normally roughly determined in the experiment and research stage from the viewpoint of facilitating insertion of the intermediate green compact 110 into the second die.

The dimensional accuracy of the product varies depending on the accuracy of the external dimension (d2) of the final green compact 120. Therefore, it is necessary to reduce the external dimension (d1) of the intermediate green compact 110 as compared with the external dimension (d2) of the final green compact 120. Specifically, the internal dimension d1 of the cavity 22 of the first die 21D is set to be smaller than the internal dimension d1 of the cavity 42 of the second die 41D. There is no established theory as to the degree by which the internal dimension d1 of the cavity 22 of the first die 21D is set to be smaller than the internal dimension d1 of the cavity 42 of the second die 41D. This is natural for a person having ordinary skill in the art who does not know that high-density molding can be implemented by halfway heating and two-step press molding.

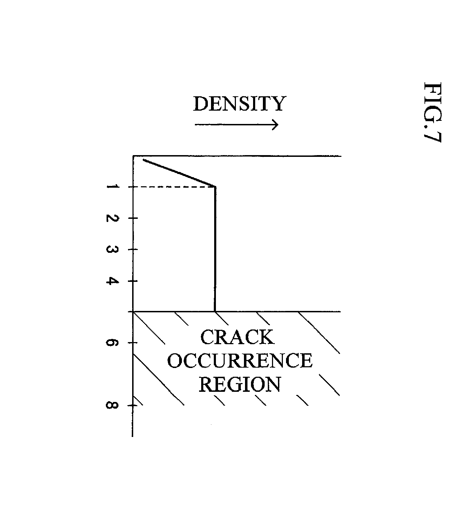

It was found by practical trial that it is necessary and sufficient to set the internal dimension d1 of the first cavity 22 to be smaller than the internal dimension d2 (=100%) of the second cavity 42 corresponding to the shape of the final green compact 120 by 1 to 5% (={[(d2-d1)/d2]×100%}) in order to mold a high-quality green compact. Specifically, a density increase region, a density constant region, and a crack occurrence region (see the graph illustrated in FIG. 7) were quantitatively determined. In FIG. 7, the horizontal axis indicates the percentage (%) calculated as described above, and the vertical axis indicates the density (g/cm³).

The lower-limit value (1%) of the percentage is selected from the viewpoint of avoiding an overloaded state and preventing breakage of the second die (second die 41D and upper punch 45PU). Specifically, when the external dimension d1 of the intermediate green compact 110 is increased (d1=(0.99×d2) or more) while maintaining the external dimension d2 of the final green compact 120, and the second pressure P2 is applied to the cavity 42 of the second die, the intermediate green compact 110 is compressed so that the periphery of the intermediate green compact 110 is expanded in the diametrical direction, and the dimension (thickness) in the pressing direction reaches a given value.

After the periphery of the intermediate green compact 110 has come in contact with the inner wall of the cavity 42, the frictional resistance with the inner wall rapidly increases, and an overloaded state may occur. If the second pressure P2 is continuously applied after the periphery of the intermediate green compact 110 has come in contact with the inner wall of the cavity 42, the second die (second die 41D) may break. Therefore, the lower-limit value must be set to be 1% or more in order to avoid an overloaded state and prevent breakage of the die.

The upper-limit value (5%) is selected from the viewpoint of preventing occurrence of cracks CRCK (see FIG. 8B) in the final green compact 120. When the external dimension d1 of the intermediate green compact 110 illustrated in FIG. 8A is decreased (d1=(0.95×d2) or less), and the second pressure P2 is applied to the second die (cavity 42), the dimension (thickness) of the intermediate green compact 110 in the pressing direction decreases. However, even if the intermediate green compact 110 has been compressed so that the thickness of the intermediate green compact 110 almost reaches the dimension of the final green compact 120, the periphery of the intermediate green compact 110 may not come in contact with the inner wall of the cavity 42. Specifically, the periphery of the intermediate green compact 110 is expanded in the diametrical direction in a state in which the periphery of the intermediate green compact 110 is not restrained.

In this case, a change in gap between the metal particles included in the intermediate green compact 110 increases or becomes unstable, and cracks CRCK (see FIG. 8B) occur in the surface of the final green compact 120. As a result, the quality of the resulting product (final green compact 120) deteriorates. Therefore, it is necessary to prevent a situation in which the internal dimension d1 of the first die (first die 21D) is significantly smaller than the internal dimension d2 of the second die (second die 41D). Specifically, the upper-limit value must be set to be 5% or less.

As illustrated in FIG. 6 that schematically shows the second die, when the internal dimension d2 of the cavity 42 of the second die (second die 41D) is constant, it is preferable to set the internal dimension d1 of the cavity 22 of the first die (first die 21D) to be smaller than the internal dimension d2 of the cavity 42 of the second die (second die 41D) by a value close to 5% when the shape (thickness) of the final green compact 120 is large, and set the internal dimension d1 of the cavity 22 of the first die (first die 21D) to be smaller than the internal dimension d2 of the cavity 42 of the second die (second die 41D) by a value close to 1% when the shape (thickness) of the final green compact 120 is small. In the first embodiment, the internal dimension d1 of the cavity 22 of the first die (first die 21D) is set to be smaller than the internal dimension d2 of the cavity 42 of the second die (second die 41D) by 2.5% from the viewpoint of increasing adaptability to a change in shape (thickness) of the final green compact 120. When the final green compact 120 has a shape (e.g., elliptical shape) other than those illustrated in FIGS. 5A to 5E, the internal dimension should be set to be smaller by 1 to 5% with respect to the distance from the inner wall of the cavity 42.

The mixed powder high-density molding system according to the first embodiment implements the high-density molding method as described below.

### <Preparation of mixed powder>

The basic metal powder (magnetic-core vitreous insulating film-coated iron powder) and the lubricant powder (zinc stearate powder) (0.2 wt%) are mixed to prepare the mixed powder 100 in a dry state. A given amount of the mixed powder 100 is fed to the mixed powder feeding device 10 (step PR0 in FIG. 1).

### <Filling with mixed powder>

The mixed powder feeding device 10 is moved from a given position (indicated by the solid line in FIG. 3B) to a supply position (indicated by the broken line in FIG. 3B) at a given timing. The inlet of the mixed powder feeding device 10 is opened, and the empty lower die 21 (cavity 22) of the first press molding device 20 is filled with the mixed powder 100 (step PR1 in FIG. 1). The lower die 21 (cavity 22) can be filled with the mixed powder 100 within 2 seconds, for example. The inlet is closed after the lower die 21 (22) has been filled with the mixed powder 100, and the mixed powder feeding device 10 is returned to the given position (indicated by the solid line in FIG. 3B).

### <Molding of intermediate green compact>

The upper die 25 of the first press molding device 20 is moved downward using the slide 5 illustrated in FIG. 2, and applies the first pressure P1 to the mixed powder 100 in the lower die 21 (cavity 22) (first press molding process). The solid lubricant produces a sufficient lubricating effect. The density ρ of the compressed intermediate green compact 110 increases along the characteristics A (solid line) illustrated in FIG. 4. When the first pressure P1 has reached a pressure (3.0 tons/cm²) corresponding to a horizontal axis index of 30, for example, the true density ratio increases to 85% (i.e., the density ρ increases to 6.63 g/cm³) (vertical axis index: 87). The press molding process is performed for 8 seconds, for example, to obtain the intermediate green compact 110 that has been molded in the die (lower die 21) (see FIG. 3A) (step PR2 in FIG. 1). The upper die 25 is then moved upward using the slide 5. When molding the disc-like green compact illustrated in FIGS. 8A and 8B, the upper punch 25PU, the first die 21D, and the lower punch 21PD illustrated in FIG. 6 are used as the upper die and the lower die. Note that the second press molding process on the preceding intermediate green compact 110 is performed by the second press molding device 40 in synchronization with the above operation.

### <Removal of intermediate green compact>

The first ejection device (movable member 23) moves the intermediate green compact 110 upward to the transfer level HL. Specifically, the intermediate green compact 110 is removed from the lower die 21. The workpiece transfer device 50 transfers the intermediate green compact 110 to the heating device 30 using the transfer bar 51 (see FIG. 3B), and the movable member 23 is returned to the initial position. The intermediate green compact 110 that has been transferred to the heating device 30 is positioned on the wire-mesh holding member 32 (see FIG. 3A).

### <Heating>

The heating device 30 starts to operate (see FIG. 3A). Hot air is blown against the intermediate green compact 110 from the blow hood 31, so that the intermediate green compact 110 is heated to the melting point (e.g., 120°C) of the lubricant powder (step PR3 in FIG. 1). Specifically, the lubricant is melted, and the distribution of the lubricant in the intermediate green compact 110 becomes uniform. The heating time is 8 to 10 seconds, for example. Note that the hot air is recycled through the wire-mesh holding member 32 and the exhaust/circulation hood 33.

### <Placement of heated intermediate green compact>

The heated intermediate green compact 110 is transferred to the second press molding device 40 by the workpiece transfer device 50 (transfer bar 52) (see FIG. 3B), positioned over the lower die 41, and placed on the movable member 43 in the lower die 41 (cavity 42) (step PR4 in FIG. 1).

### <Pre-heating of die>

The second pre-heating device 47 operates in the second press molding device 40 (optional). The second pre-heating device 47 heats the die (lower die 41 (second die 41D)) to the melting point (e.g., 120°C) of the lubricant powder before the intermediate green compact 110 is placed in the die. This makes it possible to prevent solidification of the lubricant included in the heated intermediate green compact 110 placed in the die. When molding a disc-like green compact, the upper die and the lower die differ from those illustrated in FIGS. 2, 3A, and 3B. They are the upper punch 45PU, second die 41D, and lower punch 41PD illustrated in Fig. 6

### <Molding of final green compact>

The upper die 45 is moved downward using the slide 5 illustrated in FIG. 2 (see FIG. 3A), and applies the second pressure P2 to the intermediate green compact 110 in the lower die 41 (cavity 42). The liquid lubricant produces a sufficient lubricating effect. The sweating phenomenon in which the lubricant flows in all directions occurs during the press molding process. It is also possible to efficiently reduce the friction resistance between the basic metal particles and the friction resistance between the basic metal particles and the die. The density ρ of the compressed intermediate green compact 110 increases along the characteristics B illustrated in FIG. 4. Specifically, when the second pressure P2 has exceeded a horizontal axis index of 30 (3.0 tons/cm²), for example, the density ρ rapidly increases from 6.63 g/cm³ to a value (7.75 g/cm³) corresponding to a vertical axis index of 102. When the second pressure P2 is increased to a horizontal axis index of 100 (10 tons/cm²), the density ρ (7.75 g/cm³) becomes uniform over the entire green compact. The second press molding process is performed for 8 seconds, for example, to obtain the final green compact 120 that has been molded in the second die (lower die 41) (step PR5 in FIG. 1). The upper die 45 is then moved upward using the slide 5. Note that the first press molding process on the subsequent intermediate green compact 110 is performed by the first press molding device 20 in synchronization with the above operation.

<Production of high-quality green compact> Since the internal dimension d1 of the first die (first die 21D) is set to be smaller than the internal dimension d2 of the second die (second die 41D) by 2.5%, the external dimension d1 of the intermediate green compact 110 is smaller than the external dimension d2 of the final green compact 120 by 2.5%. Specifically, it is possible to prevent a situation in which the cracks CRCK as in FIG. 8B occur in the final green compact 120 (see the graph illustrated in FIG. 7). Therefore, a high-quality product can be produced in high yield.

### <Removal of product>

The second ejection device (movable member 43) moves the final green compact 120 upward to the transfer level HL. Specifically, the final green compact 120 is removed from the lower die 41. The workpiece transfer device 50 transfers the final green compact 120 to the discharge chute 59 using the transfer bar 53 (see FIG. 3B), and the movable member 43 is returned to the initial position. The vitreous material included in the final green compact 120 having a density ρ of 7.75 g/cm³ corresponding to a vertical axis index of 102 is not modified/melted since the melting point of the lubricant powder was low. Therefore, a high-quality magnetic-core green compact that can reduce eddy current loss and improve magnetic flux density can be efficiently produced.

### <Production cycle>

According to the high-density molding method, since the first press molding process, the heating process, and the second press molding process can be performed in synchronization on the metal powder 100 (mixed powder 100) that is sequentially fed, the high-density green compact (final green compact 120) can be produced in a cycle time of 12 to 14 seconds (i.e., maximum heating time (e.g., 10 seconds) + workpiece transfer time (e.g., 2 to 4 seconds)). This makes it possible to remarkably reduce the production time as compared with the related-art example (high-temperature sintering time: 30 minutes or more). For example, it is possible to ensure a stable supply of automotive parts that have a reduced size and weight, a complex shape, and high mechanical strength, or electromagnetic device parts that exhibit excellent magnetic properties and mechanical strength, and significantly reduce the production cost.

The high-density molding method according to the first embodiment can reliably and stably produce a high-density green compact while significantly reducing the production cost by filling the first die (first die 21D) of which the internal dimension d1 is set to be smaller than the internal dimension d2 (=100%) of the second die (second die 41D) by 2.5% with the mixed powder 100 prepared by mixing the low-melting-point lubricant powder into the basic metal powder, applying the first pressure P1 to the mixed powder 100 in the first die to form the intermediate green compact 110, heating the intermediate green compact 110 to the melting point of the lubricant powder, placing the heated intermediate green compact 110 in the second die (lower die 41), and applying the second pressure P2 to the intermediate green compact 110 in the second die (lower die 41) to form the final green compact 120. It is also possible to produce a high-quality green compact having no cracks CRCK in high yeild.

Since a sintering process that is performed at a high temperature for a long time can be made unnecessary, oxidation of the green compacts 110 and 120 can be significantly suppressed while minimizing energy consumption, and significantly reducing the production cost. This is advantageous from the viewpoint of environmental protection.

Since the lubricant powder has a low melting point within the range of 90 to 190°C, it is possible to suppress oxidation of the lubricant during the first press molding step while ensuring a sufficient lubricating effect. It is also possible to selectively use a wide variety of lubricants.

Since the second die (lower die 41 and second die 41D) can be pre-heated using the second pre-heating device 47 before the intermediate green compact 110 is placed in the second die (lower die 41), it is possible to further improve the fluidity of the lubricant in all directions during the second press molding step. This makes it possible to significantly reduce the friction resistance between the basic metal particles and the friction resistance between the basic metal particles and the second die.

The high-density molding method according to the first embodiment can efficiently and stably produce a magnetic core part that exhibits excellent magnetic properties corresponding to the type of basic metal powder, using a magnetic-core vitreous insulating film-coated iron powder, a magnetic-core iron-based amorphous powder, or a magnetic-core Fe-Si alloy powder as the basic metal powder.

Since the second pressure P2 is set to be equal to the first pressure P1, it is possible to easily implement the press molding step, facilitate handling, indirectly reduce the green compact production cost, and easily implement the system based on a single press, for example.

It has been impossible to achieve a density equal to or higher than that corresponding to a vertical axis index of 100, taking account of the capacity (horizontal axis index=100 (see FIG. 4)) of a related-art system (e.g., press). According to the first embodiment, however, it is possible to achieve a density equal to or higher than that corresponding to a vertical axis index of 102 using an identical (existing) system. This fact achieves a major breakthrough in the technical field.

The high-density molding system 1 that includes the mixed powder feeding device 10, the first press molding device 20, the heating device 30, and the second press molding device 40 can reliably and stably implement the high-density molding method.

### Second embodiment

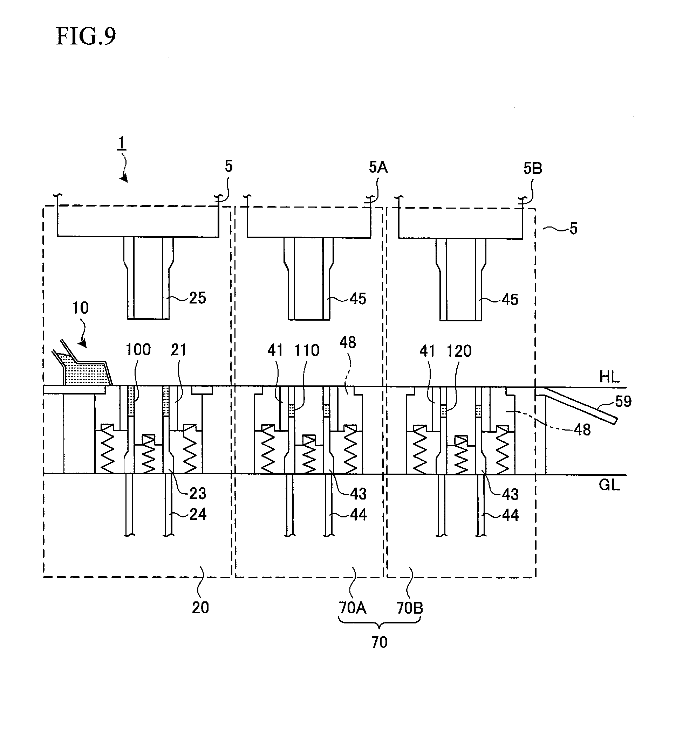

FIG. 9 illustrates a second embodiment of the invention. The second embodiment is identical with the first embodiment as to the mixed powder feeding device 10 and the first press molding device 20, but differs from the first embodiment in that the heating device 30 and the second press molding device 40 are integrally formed.

Specifically, a high-density molding system according to the second embodiment includes a heating/press molding device 70 that has the function of the heating device 30 and the function of the second press molding device 40 (see the first embodiment). The heating/press molding device 70 includes a plurality of (e.g., two) heating/press molding sub-devices 70A and 70B. The heating/press molding sub-devices 70A and 70B are selectively (sequentially) operated by a control device (not illustrated in the drawings) in a production cycle.

The heating/press molding sub-devices 70A and 70B have a basic structure similar to that of the second press molding device 40 described above in connection with the first embodiment. Each of the heating/press molding sub-devices 70A and 70B includes a hybrid heating device 48 having the functions of the heating device 30 and the second pre-heating device 47 described above in connection with the first embodiment.

Specifically, the hybrid heating device 48 is an electric heating device having a heating temperature switch function. The hybrid heating device 48 can pre-heat the lower die 41 to the melting point (e.g., 120°C) of the lubricant in advance (i.e., before the intermediate green compact 110 is placed in the lower die 41). When the intermediate green compact 110 has been placed in the lower die 41, the amount of heat is changed so that the entire intermediate green compact 110 can be heated to the melting point (e.g., 120°C) of the lubricant. The heating target area can also be selected (changed). After completion of the heating process, the second press molding process is performed using the second press molding device 40 in the same manner as described above in connection with the first embodiment. The hybrid heating device 48 can maintain the intermediate green compact 110 at a temperature equal to or higher than the melting point (e.g., 120°C) of the lubricant during the second press molding process.

As illustrated in FIG. 9, each heating/press molding sub-device (20, 70A, 70B) has an independent press structure, and each slide (5, 5A, 5B) is independently moved upward and downward by controlling the rotation of each motor. Specifically, when one of the heating/press molding sub-devices 70A and 70B performs the press molding operation, the other of the heating/press molding sub-devices 70A and 70B performs the pre-heating operation, and does not perform the press molding operation. This also applies to the case where the heating/press molding device 70 is implemented by three or more heating/press molding sub-devices taking account of the production cycle time.

In the second embodiment, when the third intermediate green compact 110 is press-molded in the first press molding device 20, the second intermediate green compact 110 is heated by the heating/press molding sub-device 70A (or the heating/press molding sub-device 70B), and the first intermediate green compact 110 is press-molded by the heating/press molding sub-device 70B (or the heating/press molding sub-device 70A) to form the final green compact 120.

According to the second embodiment, since the heating/press molding device 70 is implemented by a plurality of heating/press molding sub-devices 70A and 70B having an identical structure, the system can be simplified as compared with the first embodiment. It is also possible to simplify the production line, and further facilitate handling.

Note that the first press molding device 20 and the heating/press molding sub-device 70A (or the heating/press molding sub-device 70B), or the first press molding device 20 and the heating/press molding sub-devices 70A and 70B may be implemented by a single press structure.

### REFERENCE SIGNS LIST

- 1: High-density molding system
- 10: Mixed powder feeding device
- 20: First press molding device
- 30: Heating device
- 40: Second press molding device
- 47: Second pre-heating device
- 48: Hybrid heating device
- 50: Workpiece transfer device
- 70: Heating/press molding device
- 70A, 70B: Heating/press molding sub-device
- 100: Mixed powder
- 110: Intermediate green compact (mixed powder intermediate compressed body)
- 120: Final green compact (mixed powder final compressed body)
- CRCK: Crack
- d1: Internal dimension of first die
- d2: Internal dimension of second die

## Claims

1. A mixed powder high-density molding method comprising:
filling a first die with a mixed powder that is a mixture of a basic metal powder and a low-melting-point lubricant powder, an internal dimension of the first die being smaller than an internal dimension (=100%) of a second die by 1 to 5%;
applying a first pressure to the mixed powder in the first die to form a mixed powder intermediate compressed body;
heating the mixed powder intermediate compressed body removed from the first die to a melting point of the lubricant powder;
placing the heated mixed powder intermediate compressed body in a second die; and
applying a second pressure to the mixed powder intermediate compressed body in the second die to form a high-density mixed powder final compressed body.

2. The mixed powder high-density molding method as defined in claim 1,
wherein the lubricant powder has a low melting point within a range of 90 to 190°C.

3. The mixed powder high-density molding method as defined in claim 1 or 2,
wherein the second die is pre-heated to the melting point before the mixed powder intermediate compressed body is placed in the second die.

4. The mixed powder high-density molding method as defined in claim 1 or 2,
wherein the second pressure is selected to be equal to the first pressure.

5. A mixed powder high-density molding system comprising:
a mixed powder feeding device that can externally feed a mixed powder that is a mixture of a basic metal powder and a low-melting-point lubricant powder;
a first press molding device that applies a first pressure to the mixed powder, with which a first die has been filled using the mixed powder feeding device, to form a mixed powder intermediate compressed body;
a heating device that heats the mixed powder intermediate compressed body removed from the first die to a melting point of the lubricant powder; and
a second press molding device that applies a second pressure to the mixed powder intermediate compressed body that is placed in a second die to form a high-density mixed powder final compressed body,
an internal dimension of the first die being smaller than an internal dimension of the second die by 1 to 5%.

6. The mixed powder high-density molding system as defined in claim 5,
wherein the heating device and the second press molding device are formed by a heating/press molding device that functions as the heating device and the second press molding device, the heating/press molding device includes a plurality of heating/press molding sub-devices, and each of the plurality of heating/press molding sub-devices can be selectively and sequentially operated in each cycle.

7. The mixed powder high-density molding system as defined in claim 5, further comprising:
a pre-heating device that pre-heats the second die.

8. The mixed powder high-density molding system as defined in claim 5, further comprising:
a workpiece transfer device that transfers the mixed powder intermediate compressed body formed by the first press molding device to the heating device, transfers the mixed powder intermediate compressed body heated by the heating device to the second press molding device, and transfers the mixed powder final compressed body formed by the second press molding device to a discharge section.
